# EUROPEAN PATENT SPECIFICATION

(11) **EP 4 011 645 B1**
(45) Date of publication and mention of the grant of the patent: **18.12.2024**
(21) Application number: 21211342.7
(22) Date of filing: 30.11.2021
(51) Int. Cl.: B60C 9/20

(54) **TRUCK TIRE**
LASTWAGENREIFEN
PNEUMATIQUE DE CAMION

(30) Priority: 14.12.2020 US 202017120346
(43) Date of publication of application: 15.06.2022
(73) Proprietor: The Goodyear Tire & Rubber Company, Akron, OH 44316 (US)
(72) Inventor: MULLER, Philippe Joseph Auguste, B-6971 Champlon (BE); MANOGARAN, Arun Prasath, L-7740 Colmar-Berg (LU); PASSANTE SPACCAPIETRA, Ettore, L-9070 Ettelbruck (LU); WINKIN, Didier, B-6600 Bastogne (BE)
(74) Representative: Kutsch, Bernd

(56) References cited:
- WO-A1-2012/079871
- WO-A1-99/06628
- WO-A2-2015/014639
- DE-A1- 102010 000 471

## Description

### Field of the Invention

The invention relates in general to pneumatic tires, and more particularly for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

DE 10 2010 000471 A1 describes a tire in accordance with the preamble of claim 1. A similar tire is also describes in WO 2012/079872 A1.

WO 2015/014639 A2 describes a steel cord of the construction 4x4x0.22 mm for use in tires.

WO99/06628 describes a steel cord for a protection ply of a tire having a 5x0.38 mm construction.

### Summary of the Invention

The invention relates to a tire in accordance with claim 1.

Dependent claims refer to preferred embodiments of the invention.

The invention provides in a first aspect a pneumatic tire for use on trucks, the tire comprising: a tread and a belt reinforcement structure located radially inward of the tread, the belt structure including a first and second working belt, wherein the angle of the first and second working belts range from 10 degrees to 50 degrees as measured relative to the circumferential direction, and wherein the angle of the first working belt is different than the angle of the second working belt, wherein the belt structure further comprises a relatively low angle belt having reinforcements angled at less than 5 degrees relative to the circumferential direction, and wherein the relatively low angle belt has extensible reinforcements.

The invention provides in a preferred aspect a pneumatic tire for use on trucks, the tire having a tread and a belt reinforcement structure located radially inward of the tread, the belt structure including a first and second working belts, wherein the angle of the first and second working belts range from 10 degrees to 50 degrees from the circumferential direction, wherein the belt structure further comprises a relatively low angle belt having reinforcements angled at less than 5 degrees, and further including a top protector belt located radially outwards of the working belts, wherein the top belt has a width greater than 50% of the tread width.

The invention provides in a preferred aspect a pneumatic tire for use on trucks, the tire comprising: a tread and a belt reinforcement structure located radially inward of the tread, the belt structure including a first and second working belt, wherein the first and second working belt are formed of extensible reinforcements, wherein the angle of the first and second working belts range from 10 degrees to 50 degrees as measured relative to the circumferential direction, and wherein the angle of the first working belt is different than the angle of the second working belt, wherein the belt structure further comprises a relatively low angle belt having reinforcements angled at less than 5 degrees relative to the circumferential direction, wherein the relatively low angle belt has extensible reinforcements, and wherein the relatively low angle belt has a 4x4x0.22 cord construction.

### Definitions

"Aspect Ratio" means the ratio of a tire's section height to its section width.

"Axial" and "axially" mean the lines or directions that are parallel to the axis of rotation of the tire.

"Belt Structure" or "Reinforcing Belts" means one or at least two annular layers or plies of parallel cords, woven or unwoven, underlying the tread, unanchored to the bead, and preferably having both left and right cord angles in the range from 17° to 27° with respect to the equatorial plane of the tire.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions perpendicular to the axial direction within + or - 5 degrees.

"Cord" means one of the reinforcement strands, including fibers, which are used to reinforce the plies.

"Extensible" means a cord having a relative elongation of greater than 0.2% at 10% of the breaking load, when measured from a cord extracted from a cured tire. The tensile measurements for elongation at break (total elongation in %) are performed in accordance with ISO 6892-1 B (2019) at preload of no more than 25 MPa tested on a cable or cord when taken from a cured tire.

"Radial" and "radially" mean directions radially toward or away from the axis of rotation of the tire.

### Brief Description of the Drawings

The invention will be described by way of example and with reference to the accompanying drawings in which:
FIG. 1 is a cross-sectional view of a first embodiment of a tire of the present invention; and

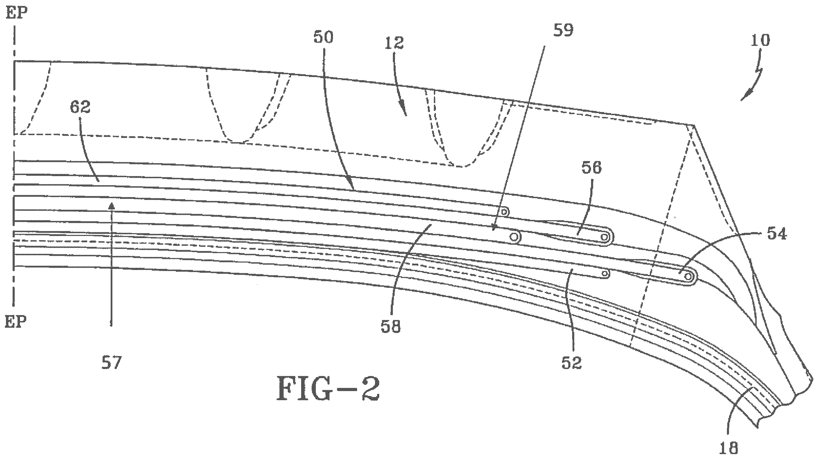

FIG. 2 is a close-up view of the belt package of the tire of FIG. 1.

### Detailed Description of Preferred Embodiments of the Invention

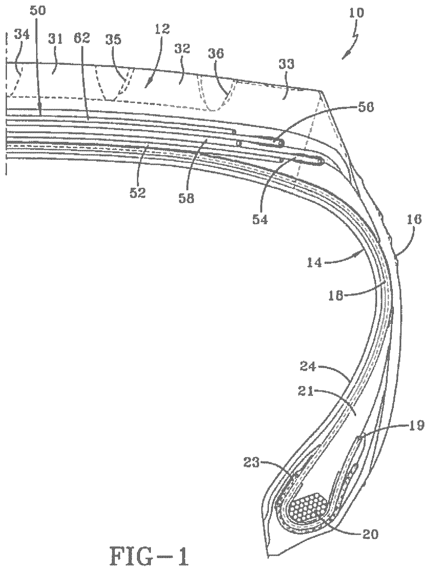

Figure 1 illustrates a first embodiment of one half of a pneumatic tire 10, suitable for use as a truck tire. The tire 10 has a tread 12 with a non-skid depth D. The tire tread 12 may comprise a plurality of circumferentially continuous ribs, which may vary, but are shown for example as ribs 31, 32 and 33. Positioned between each rib is a circumferential groove 34, 35, 36, which are preferably continuous. The tread may also comprise optional sipes (not shown). The tread pattern is not limited to same, and may comprise, for example, a plurality of blocks and grooves (not shown).

The tire 10 further comprises a casing 14 which includes two opposed sidewalls 16 which extend down from the tread 12 to the bead area. The casing of the tire may optionally include an inner liner 24 which is typically formed of halobutyl rubber which forms an air impervious barrier. The tire casing 14 further includes one or more radial plies 18 extending from the tread, down the sidewall to the tire bead 20. Preferably, the radial ply 18 is wrapped about or otherwise secured to each annular bead 20. In the embodiment illustrated and not limited to same, there is only one ply 18 and it is wrapped around the bead in an inside out manner such that the ply ending 19 is located axially outward and radially outwards of the bead. The beads 20 may be any desired shape, but in this embodiment, it is shown as a hexagonal configuration with steel filaments.

The tire may further optionally include an apex 21 which may be shaped like a triangle. The ply turnup in the bead area may be optionally reinforced with a chipper 23 wrapped about the bead ply 18.

The tire 10 further includes a belt package 50 which is located between the tread 12 and the one or more plies 18. The belt package may comprise one or more layers of reinforcement. The ply 18 and the belt reinforcing structure 50 are made from cord reinforced elastomeric material, wherein the cords are typically steel wire or polyamide filaments and the elastomer preferably being rubber.

### Transition Belt 52

The belt reinforcing package 50 may include an optional transitional belt 52 that is the radially innermost belt of the belt package 50. The transition belt 52 preferably has an axial belt width in a range of from 60% to 90% of the tread arc width. The transition belt 52 preferably has an orientation that has an angle of between 45 to 70 degrees (preferably right). The transition belt 52 is preferably made of ultra tensile steel with a construction of 3+2x0.35 UT.

### Working Belts 54, 56

Belt reinforcing structure 50 further includes a first extensible working belt 54 and a second extensible working belt 56. The first working belt 54 is located radially inwards of the second working belt 56. Preferably, the first working belt 54 has an axial belt width substantially equal to the tread arc width and is preferably the widest belt of the belt package 50. The breaker angle of first working belt 54 is between 10 and 50 degrees, preferably with a right orientation, more preferably in the range of from 10 to 45 degrees or in the range of from 12 to 50 degrees. The first working belt 54 preferably comprises extensible or high elongation wire as cord reinforcement having a % elongation at 10% of breaking load of greater than 0.2%, as measured from a cord taken from a cured tire. Preferably, the % elongation at the 10% of breaking load is greater than 0.4 %, and more preferably greater than 0.8%, and most preferably greater than 1.2%. The first working belt construction is preferably formed of wire having a wire construction of 3x7x, 3x4x, 4x4x. Preferably the wire has a construction of 4+3x, and more preferably, a wire construction of 4+3x0.35 UT (UT = ultra-tensile steel). The EPI ("ends per 2.54 cm") preferably range from 8 to 14.

The second working belt 56 is located radially outward of the first working belt, and preferably has an axial width less than the width of first working belt 54. Preferably, the second working belt 56 has a width less than the axial width of the first working belt 54 by a step off, which preferably ranges from 10 to 20 mm. The second working belt 56 has a breaker angle between 10 to 50 degrees, and more preferably in the range of 16 to 30 degrees, preferably with a left orientation, and more preferably in the range of from 19 to 25 degrees. The angle of the first working belt 54 is different from the angle of the second working belt 56. The angle of either the first or second working belt 54, 56 is the angle of the parallel reinforcement cords relative to the circumferential direction of the tire 10. The angle of the first working belt α₁ is greater than the angle of the second working belt α₂. Preferably, the absolute difference of |α₁ - α₂| is greater than 5 degrees. The second working belt 56 preferably comprises extensible or high elongation wire as cord reinforcement preferably having the same construction with the same but opposite angular orientation as the first working belt 54.

The tensile strength measurements on the working belts 54, 56 such as the load at break (maximum load in N), strength at break (in MPa) and elongation at break (total elongation in %) are performed in tension in accordance with ISO 6892-1 B (2019) at a pre-load no more than 25 MPa tested on a cable or wire when taken from a cured tire.

### Low Angle Belt 58

The belt structure 50 further comprises a relatively low angle belt 58 which is preferably located between the first and second working belts 54, 56. The relatively low angle belt 58 may also be located between the transition belt 52 and the first working belt 54, or radially outward of the second working belt 56.

The relatively low angle belt 58 has reinforcements that are oriented circumferentially at 5 degrees or less, preferably 2 degrees or less such as 0.5 degrees or 0 degrees. The relatively low angle belt 58 is preferably formed from spirally winding a rubberized strip of one or more cords. Preferably, the strip has 1-4 steel cords and has a strip width less than 15 mm such as 5 mm or 5 mm to 10 mm. Alternatively, the relatively low angle belt 58 may be formed of a cut belt with the reinforcements oriented in the range of 0 to 10 degrees from the circumferential direction, or more preferably in the range of 0 to 5 degrees from the circumferential direction. The relatively low angle belt 58 has a width sized to avoid compression in the shoulder area. The axial belt width of the relatively low angle belt 58 is preferably less than the axial belt width of the first and second working belts 54, 56 and is preferably wider than the top protector belt 62.

The relatively low angle belt 58 preferably comprises reinforcement cords, preferably steel wire cords, of a 3x7 construction, a 3x4 construction, or a 4x4 construction. More preferably, the reinforcement cords are steel wire cords of a 3x7x0.22 construction, a 3x4x0.26 construction, or a 4x4x0.22 construction, and preferably formed of high tensile steel.

The reinforcement cords of the relatively low angle belt 58 are extensible.

For measurements taken from bare cords taken from a cured tire, the % elongation at 10% of breaking load is 0.2 or more, and preferably 0.4 % or more, and more preferably 0.6% or more, and most preferably 0.8%. Alternatively, the relatively low angle belt may be formed of non-metal reinforcements such as aramid, carbon fiber, or polyketone or POK.

The tensile measurements such as the load at break (maximum load in N), strength at break (in MPa) and elongation at break (total elongation in %) are performed in tension in accordance with ISO 6892-1 B (2019) at a pre-load no more than 10 MPa tested on a cable or wire when taken from a cured tire.

### Rubber Penetration

The relatively low angle belt 58 has a central portion 57 located between the two outer lateral ends 59. Preferably, the central portion 57 of the relatively low angle belt 58 has an axial width in the range of from 40% to 60% of the total relatively low angle belt width, and more preferably about 50% or 45% to 55% of the total relatively low angle belt width. The reinforcement cords of the relatively low angle belt are typically coated with a rubber compound before layup. During cure or vulcanization, the rubber penetrates the cord.

The degree to which the rubber penetrates the free zones of a cord (called rubber penetration) is expressed as a percentage of the free zones occupied by a rubber compound after curing and is determined by an air-permeability test. This test is performed on cords extracted directly from the relatively low angle belt 58 of a cured tire which has therefore been penetrated with the cured rubber compound.

The air permeability test is run as per protocol described in: L. BOURGOIS, Survey of Mechanical Properties of Steel Cord and Related Test Methods, Special Technical Publication 694, ASTM, 1980.

For a 3x7x0.22 construction, the rubber penetration at the outer lateral ends 59 of the relatively low angle belt 58 can be set to be either equal to, or less than, the rubber penetration at the central portion 59. Preferably, it is less than the rubber penetration at the central portion 59 such as 95% at the axially outer ends 57 and 45 % at the central portion.

For a 4x4x0.22 cord construction, the rubber penetration at the outer lateral ends 57 of the relatively low angle belt 58 was determined to be greater than the rubber penetration at the central portion 59. For this 4x4x0.22 configuration, it was found that the rubber penetration at the outer lateral ends 57 was in a range of from 90% to 100%, while the rubber penetration at the central portion 59 was 50% or less.

### Top Protection Belt

The belt structure further includes a top protector belt 62 that is the radially outermost belt. The top protector belt 62 preferably has a width that is in the range of from 80% to 85% of the width of the relatively low angle belt 58. Preferably, the belt 62 has the same angle and orientation as the adjacent working belt 56.

The top protector belt 62 preferably has reinforcement cords made of high impact steel cord wherein the cord preferably has full rubber penetration, i.e., at least 90% up to 100%, that helps in avoiding corrosion and enable excellent retreadability. It also provides high impact resistance as it exhibits more work to break because of its enhanced % elongation (> 5%) even after embedded in rubber.

Preferably, the reinforcement cords of the top protector belt 62 have a cord construction of 5x, and more preferably, 5x0.35 or 5x0.38.

The reinforcement cords of the top protector belt 62 are preferably made of steel, and are high impact cords (HI), with a very high energy absorption with energy/cord > 7.5 J/mm2, using a Charpy Impact Tester in a 2.54 cm strip with 10 EPI (ends per 2.54 cm).

Maximum compressive stresses of such cords are preferably above 350 MPa at maximum deformation at kinking of > 1.5%.

Having a top protective belt with a high impact cord helps in absorbing the shock created during an impact and relieves the stresses on the tread shoulder grooves.

### Aspect Ratio and Net-to-Gross-Ration

The aspect ratio of the tire described above may vary.

The aspect ratio is preferably in the range of 50 to 90.

The tire preferably has a net to gross ratio in the range of 70 to 90, more preferably in the range of from 74 to 86 or from 78 to 84.

Overall, the tire in accordance with the invention has improved shock absorbing characteristics during an impact and an improved stress relieve, in particular on the tread shoulder grooves. This leads to an improved crown durability and increased load carrying capacity. The tire also shows an excellent retreadability and improved corrosion resistance.

## Claims

1. A pneumatic tire for use on trucks, the tire (10) comprising a tread (12) and a belt structure (50) located radially inward of the tread (10), the belt structure (50) including a first working belt (54) and a second working belt (56), wherein the angle of the first and second working belts (54, 56) each range from 10 degrees to 50 degrees as measured relative to the circumferential direction of the tire (10), and wherein the angle of the first working belt (54) is greater than the angle of the second working belt (56), wherein the belt structure (50) further comprises a relatively low angle belt (58) having reinforcements angled at less than 5 degrees relative to the circumferential direction of the tire (10), wherein the relatively low angle belt (58) has extensible reinforcement cords, i. e. cords having a relative elongation of greater than 0.2% at 10% of the breaking load, when measured from a cord extracted from a cured tire, **characterized in that** the tire (10) further includes a radially outermost top protector belt (62) comprising reinforcement cords having an impact energy absorption of > 7.5 J/mm² measured using a Charpy Impact Tester in a 2.54 cm strip with 10 ends per 2.54 cm, and wherein the rubber penetration at the outer lateral ends (59) of the relatively low angle belt (58) is greater than the rubber penetration at a central portion (57) of the relatively low angle belt (58).

2. The tire of claim 1 wherein the extensible reinforcement cords of the relatively low angle belt (58) have a 4x4x0.22 cord construction.

3. The pneumatic tire of claim 1 wherein the first and second working belt (54, 56) each have extensible reinforcement cords.

4. The pneumatic tire of claim 1 wherein the tire (10) has said top protector belt (62) located radially outwards of said first and second working belts (54, 56); and wherein the top protector belt (62) has a width greater than 50% of the tread width and/or a width lower than the axial widths of each of the working belts (54, 56).

5. The tire of at least one of the previous claims wherein the absolute value of the difference between the belt angle of the first working belt (54) minus the belt angle of the second working belt (56) is greater than 5 degrees.

6. The tire of at least one of the previous claims wherein the first and second working belts (54, 56) comprise a wire reinforcement having a % elongation at 10% of the breaking load greater than 0.2 %, alternatively greater than 0.4 %, when taken from a wire from a cured tire.

7. The tire of at least one of the previous claims wherein the relatively low angle belt (58) comprises a wire reinforcement having a % elongation at 10% of the breaking load greater than 0.4% or greater than 0.8 % or greater than 1.2%, when taken from a wire from a cured tire.

8. The tire of at least one of the previous claims wherein the relatively low angle belt (58) has a width greater than the width of a top belt or the top protector belt (62).

9. The tire of claim 1 wherein the rubber penetration at both outer lateral ends (59) of the relatively low angle belt (58) is greater than 90% or is in a range of from 90% to 100%.

10. The tire of at least one of the previous claims wherein the rubber penetration at the central portion (57) of the relatively low angle belt (58) is less than 50%.

11. The tire of claim 1, 9 or 10 wherein said central portion (57) of the relatively low angle belt (58) is located between said two outer lateral ends (59) of the relatively low angle belt (58), the central portion (57) having an axial width in the range of from 40% to 60% of the total axial width of the relatively low angle belt width, preferably about 50% or 45% to 55% of the total axial width of the relatively low angle belt width, and the two outer lateral ends (59) each having an axial width in a range of from 5% to 30%, preferably 10% to 25%, of the total axial width of the relatively low angle belt width.

12. The tire of at least one of the previous claims wherein the relatively low angle belt (58) is located between the first and second working belts (54, 56).

13. The tire of at least one of the previous claims wherein the belt structure (50) further includes a transitional belt (52) as the radially innermost belt of the belt package (50).

14. The tire of at least one of the previous claims wherein the first and second working belts (54, 56) each comprise wire reinforcement cords having a 3x7x, a 3x4x, a 4x4x or a 4+3x construction.

15. The tire of at least one of the previous claims wherein the relatively low angle belt (58) comprises wire reinforcement having a 3x7, a 3x4, or a 4x4 construction.

## Patentansprüche

1. Luftreifen zur Verwendung auf Lastkraftwagen, wobei der Reifen (10) eine Lauffläche (12) und eine Gürtelstruktur (50) aufweist, die radial innerhalb der Lauffläche (10) angeordnet ist, wobei die Gürtelstruktur (50) einen ersten Arbeitsgürtel (54) und einen zweiten Arbeitsgürtel (56) aufweist, wobei der Winkel des ersten und des zweiten Arbeitsgürtels (54, 56) jeweils im Bereich von 10 Grad bis 50 Grad liegt, gemessen relativ zur Umfangsrichtung des Reifens (10), und wobei der Winkel des ersten Arbeitsgürtels (54) größer ist als der Winkel des zweiten Arbeitsgürtels (56), wobei die Gürtelstruktur (50) ferner einen Gürtel (58) mit relativ niedrigem Winkel umfasst, der Verstärkungen aufweist, die um weniger als 5 Grad relativ zur Umfangsrichtung des Reifens (10) abgewinkelt sind, wobei der Gürtel (58) mit relativ niedrigem Winkel dehnbare Verstärkungskorde aufweist, d. h. Korde, die eine relative Dehnbarkeit von mehr als 0,2 % bei 10 % der Bruchlast aufweisen, die an einem aus einem vulkanisierten Reifen gezogenen Kord gemessen wird, **dadurch gekennzeichnet, dass** der Reifen (10) ferner einen radial äußersten oberen Schutzgürtel (62) enthält, der Verstärkungskorde umfasst, die eine Aufprallenergieabsorption von > 7,5 J/mm² aufweisen, die mit einem Charpy Impact Tester in einem 2,54 cm langen Streifen mit 10 Enden pro 2,54 cm gemessen wird, und wobei die Kautschukdurchdringung an den äußeren seitlichen Enden (59) des Gürtels (58) mit relativ niedrigem Winkel größer ist als die Kautschukdurchdringung in einem mittleren Abschnitt (57) des Gürtels (58) mit relativ niedrigem Winkel.

2. Reifen nach Anspruch 1, wobei die dehnbaren Verstärkungskorde des Gürtels (58) mit relativ niedrigem Winkel eine 4x4x0,22-Kordkonstruktion aufweisen.

3. Luftreifen nach Anspruch 1, wobei der erste und der zweite Arbeitsgürtel (54, 56) jeweils dehnbare Verstärkungskorde aufweisen.

4. Luftreifen nach Anspruch 1, wobei der Reifen (10) den oben genannten oberen Schutzgürtel (62) aufweist, der radial außerhalb des oben genannten ersten und zweiten Arbeitsgürtels (54, 56) angeordnet ist; und wobei der obere Schutzgürtel (62) eine Breite von mehr als 50% der Laufflächenbreite und/oder eine Breite aufweist, die geringer ist als die axialen Breiten jedes der Arbeitsgürtel (54, 56).

5. Reifen nach mindestens einem der vorhergehenden Ansprüche, wobei der Absolutwert der Differenz zwischen dem Gürtelwinkel des ersten Arbeitsgürtels (54) minus dem Gürtelwinkel des zweiten Arbeitsgürtels (56) größer als 5 Grad ist.

6. Reifen nach mindestens einem der vorhergehenden Ansprüche, wobei der erste und der zweite Arbeitsgürtel (54, 56) eine Drahtverstärkung, die eine prozentuale Dehnung bei 10 % der Bruchlast von mehr als 0,2 %, alternativ von mehr als 0,4 %, aufweist, wenn sie von einem Draht aus einem vulkanisierten Reifen genommen wird.

7. Reifen nach mindestens einem der vorhergehenden Ansprüche, wobei der Gürtel (58) mit relativ niedrigem Winkel eine Drahtverstärkung umfasst, die eine prozentuale Dehnung bei 10 % der Bruchlast von mehr als 0,4 % oder mehr als 0,8 % oder mehr als 1,2 % aufweist, wenn sie von einem Draht aus einem vulkanisierten Reifen genommen wird.

8. Reifen nach mindestens einem der vorhergehenden Ansprüche, wobei der Gürtel (58) mit relativ niedrigem Winkel eine Breite aufweist, die größer ist als die Breite eines oberen Gürtels oder des oberen Schutzgürtels (62).

9. Reifen nach Anspruch 1, wobei die Kautschukdurchdringung an beiden äußeren seitlichen Enden (59) des Gürtels (58) mit relativ niedrigem Winkel größer als 90 % ist oder in einem Bereich von 90 % bis 100 % liegt.

10. Reifen nach mindestens einem der vorhergehenden Ansprüche, wobei die Kautschukdurchdringung an dem mittleren Abschnitt (57) des Gürtels (58) mit relativ niedrigem Winkel weniger als 50 % beträgt.

11. Reifen nach Anspruch 1, 9 oder 10, wobei der oben genannte mittlere Abschnitt (57) des Gürtels (58) mit relativ geringem Winkel zwischen den oben genannten beiden äußeren seitlichen Enden (59) des Gürtels (58) mit relativ geringem Winkel angeordnet ist, wobei der mittlere Abschnitt (57) eine axiale Breite im Bereich von 40 % bis 60 % der gesamten axialen Breite des Gürtels mit relativ geringem Winkel aufweist, vorzugsweise etwa 50 % oder 45 % bis 55 % der gesamten axialen Breite des Gürtels mit relativ geringem Winkel, und die beiden äußeren seitlichen Enden (59) jeweils eine axiale Breite in einem Bereich von 5 % bis 30 %, vorzugsweise 10 % bis 25 %, der gesamten axialen Breite des Gürtels mit relativ geringem Winkel aufweisen.

12. Reifen nach mindestens einem der vorhergehenden Ansprüche, wobei der Gürtel (58) mit relativ niedrigem Winkel zwischen dem ersten und zweiten Arbeitsgürtel (54, 56) angeordnet ist.

13. Reifen nach mindestens einem der vorhergehenden Ansprüche, wobei die Gürtelstruktur (50) ferner einen Übergangsgürtel (52) als den radial innersten Gürtel des Gürtelpakets (50) aufweist.

14. Reifen nach mindestens einem der vorhergehenden Ansprüche, wobei der erste und der zweite Arbeitsgürtel (54, 56) jeweils Drahtverstärkungskorde mit einer 3x7x, einer 3x4x, einer 4x4x oder einer 4+3x Konstruktion aufweisen.

15. Reifen nach mindestens einem der vorhergehenden Ansprüche, wobei der Gürtel (58) mit relativ niedrigem Winkel eine Drahtverstärkung mit einer 3x7, 3x4 oder 4x4 Konstruktion aufweist.

## Revendications

1. Bandage pneumatique pour son utilisation sur des camions, le bandage pneumatique (10) comprenant une bande de roulement (12) et une structure de ceintures (50) qui est située dans la direction radiale à l'intérieur de la bande de roulement (10), la structure de ceintures (50) englobant une première ceinture de travail (54) et une deuxième ceinture de travail (56), dans lequel l'angle formé par la première et la deuxième ceinture de travail (54, 56) se situe respectivement dans la plage allant de 10 degrés à 50 degrés, tel qu'on le mesure par rapport à la direction circonférentielle du bandage pneumatique (10) ; et dans lequel l'angle formé par la première ceinture de travail (54) est supérieur à l'angle formé par la deuxième ceinture de travail (56), dans lequel la structure de ceintures (50) comprend en outre une ceinture (58) formant un angle relativement petit, qui possède des renforcements qui forment un angle d'au moins 5 degrés par rapport à la direction circonférentielle du bandage pneumatique (10), dans lequel la ceinture (58) qui forme un angle relativement petit possède des câblés de renforcement extensibles, c'est-à-dire des câblés qui possèdent un allongement relatif qui est supérieur à 0,2 %, à une charge de rupture de 10 %, lorsqu'on le mesure à partir d'un câblé extrait d'un bandage pneumatique qui a été vulcanisé, **caractérisé en ce que** le bandage pneumatique (10) englobe en outre une ceinture de sommet (62) faisant office de protection, située le plus à l'extérieur dans la direction radiale, qui comprend des câblés de renforcement possédant une absorption de l'énergie d'impact qui est supérieure à 7,5 J/mm², lorsqu'on la mesure en utilisant un pendule de Charpy dans une bande de 2,54 cm qui comprend 10 bouts par 2,54 cm, et dans lequel la pénétration du caoutchouc aux extrémités latérales externes (59) de la ceinture (58) formant un angle relativement petit est supérieure à la pénétration du caoutchouc à une portion centrale (57) de la ceinture (58) formant un angle relativement petit.

2. Bandage pneumatique selon la revendication 1, dans lequel les câblés de renforcement extensibles de la ceinture (58) formant un angle relativement petit possèdent une structure de câblés du type 4x4x0,22.

3. Bandage pneumatique selon la revendication 1, dans lequel la première et la deuxième ceinture de travail (54, 56) possèdent respectivement des câblés de renforcement extensibles.

4. Bandage pneumatique selon la revendication 1, dans lequel ladite ceinture de sommet (62) faisant office de protection, du bandage pneumatique (10), est située dans la direction radiale, à l'extérieur de ladite première et de ladite deuxième ceinture de travail (54, 56) ; et dans lequel la ceinture de sommet (62) faisant office de protection possède une largeur qui représente plus de 50 % de la largeur de la bande de roulement et/ou possède une largeur qui est inférieure aux largeurs axiales de chacune des ceintures de travail (54, 56).

5. Bandage pneumatique selon au moins une des revendications précédentes, dans lequel la valeur absolue de la différence entre l'angle de ceinture formé par la première ceinture de travail (54) moins l'angle de ceinture formé par la deuxième ceinture de travail (56) est supérieure à 5 degrés.

6. Bandage pneumatique selon au moins une des revendications précédentes, dans lequel la première et la deuxième ceinture de travail (54, 56) comprennent un renforcement en fil métallique qui possède un pourcentage d'allongement à 10 % de la charge de rupture qui est supérieur à 0,2 %, en variante qui est supérieur à 0,4 %, lorsqu'on le mesure à partir d'un fil métallique prélevé d'un bandage pneumatique qui a été vulcanisé.

7. Bandage pneumatique selon au moins une des revendications précédentes, dans lequel la ceinture (58) formant un angle relativement petit comprend un renforcement en fil métallique qui possède un pourcentage d'allongement à 10 % de la charge de rupture qui est supérieur à 0,4 %, ou qui est supérieur à 0,8 % ou qui est supérieur à 1,2 %, lorsqu'on le mesure à partir d'un fil métallique prélevé d'un bandage pneumatique qui a été vulcanisé.

8. Bandage pneumatique selon au moins une des revendications précédentes, dans lequel la ceinture (58) formant un angle relativement petit possède une largeur qui est supérieure à la largeur d'une ceinture de sommet ou de la ceinture de sommet (62) faisant office de protection.

9. Bandage pneumatique selon la revendication 1, dans lequel la pénétration du caoutchouc aux deux extrémités latérales externes (59) de la ceinture (58) formant un angle relativement petit représente plus de 90 % ou se situe dans une plage allant de 90 % à 100 %.

10. Bandage pneumatique selon au moins une des revendications précédentes, dans lequel la pénétration du caoutchouc à la portion centrale (57) de la ceinture (58) formant un angle relativement petit représente moins de 50 %.

11. Bandage pneumatique selon la revendication 1, 9 ou 10, dans lequel ladite portion centrale (57) de la ceinture (58) formant un angle relativement petit est située entre lesdites deux extrémités latérales externes (59) de la ceinture (58) formant un angle relativement petit, la portion centrale (57) possède une largeur axiale qui se situe dans la plage allant de 40 % à 60 % de la largeur axiale totale de la ceinture formant un angle relativement petit, de préférence d'environ 50 % ou d'environ 45 % ou d'environ 55 % de la largeur axiale totale de la ceinture formant un angle relativement petit, et les deux extrémités latérales externes (59) possèdent chacune une largeur axiale qui se situe dans une plage allant de 5 % à 30 %, de préférence de 10 % à 25 % de la largeur axiale totale de la ceinture formant un angle relativement petit.

12. Bandage pneumatique selon au moins une des revendications précédentes, dans lequel la ceinture (58) formant un angle relativement petit est située entre la première et la deuxième ceinture de travail (54, 56).

13. Bandage pneumatique selon au moins une des revendications précédentes, dans lequel la structure de ceintures (50) englobe en outre une ceinture de transition (52) sous la forme de la ceinture (50) du paquet de ceintures la plus interne dans la direction radiale.

14. Bandage pneumatique selon au moins une des revendications précédentes, dans lequel la première et la deuxième ceinture de travail (54, 56) comprennent chacune des câblés de renforcement en fil métallique qui possèdent une structure du type 3x7x, une structure du type 3x4x, une structure du type 4x4x ou une structure du type 4+3x.

15. Bandage pneumatique selon au moins une des revendications précédentes, dans lequel la ceinture (58) formant un angle relativement petit comprend un renforcement en fil métallique qui possède une structure du type 3x7, une structure du type 3x4 ou une structure du type 4x4.
